# EUROPÄISCHE PATENTSCHRIFT

(11) **EP 2 676 357 B1**
(45) Veröffentlichungstag und Bekanntmachung des Hinweises auf die Patenterteilung: **09.10.2019**
(21) Anmeldenummer: 12712613.4
(22) Anmeldetag: 20.03.2012
(51) Int. Cl.: H02K 9/04, H02K 5/20, H02K 3/24, H02K 15/00

(54) **KÜHLEINRICHTUNG ZUM KÜHLEN EINES WICKLUNGSGEFLECHTS EINER ELEKTRISCHEN MASCHINE UND VERFAHREN ZUM NACHRÜSTEN DER ELEKTRISCHEN MASCHINE MIT DER KÜHLEINRICHTUNG**
COOLING DEVICE FOR COOLING A WINDING BRAID OF AN ELECTRICAL MACHINE AND METHOD FOR RETROFITTING THE ELECTRICAL MACHINE WITH THE COOLING DEVICE
DISPOSITIF DE REFROIDISSEMENT POUR LE REFROIDISSEMENT D'UN BOBINAGE D'UNE MACHINE ÉLECTRIQUE ET PROCÉDÉ D'INSTALLATION A POSTERIORI DU DISPOSITIF DE REFROIDISSEMENT SUR UNE MACHINE ÉLECTRIQUE

(30) Priorität: 15.04.2011 EP 11162657
(43) Veröffentlichungstag der Anmeldung: 25.12.2013
(73) Patentinhaber: Siemens Aktiengesellschaft, 80333 München (DE)
(72) Erfinder: MICHELSSON, Olaf, 99310 Arnstadt (DE); BANDA, Marcus, 99084 Erfurt (DE); CHEN, Zhiyun, 5033 Buchs (CH)
(86) Internationale Anmeldenummer: PCT/EP2012/054860
(87) Internationale Veröffentlichungsnummer: WO 2012/139858

(56) Entgegenhaltungen:
- DE-A1- 3 242 018
- DE-A1- 19 549 204

## Beschreibung

Die Erfindung betrifft eine Kühleinrichtung zum Kühlen eines luftdurchlässigen Wicklungsgeflechts einer elektrischen Maschine und eine elektrische Maschine mit der Kühleinrichtung.

Eine elektrische Maschine, wie beispielsweise ein Generator, weist einen Ständer mit einer Ständerwicklung auf. Herkömmlich ist die Ständerwicklung von Wicklungsleiter gebildet, wobei der Wicklungsleiter zu einem luftdurchlässigen Wicklungsgeflecht gebildet ist. Der Ständer ist zylindrisch ausgebildet, wobei die Ständerwicklung stirnseitig einen Wickelkopf aufweist. Beim Betrieb des Generators entstehen in der Ständerwicklung Stromwärmeverluste, die herkömmlich mittels einer Kühleinrichtung von dem Generator abgeführt werden. Insbesondere besteht die Gefahr einer Überhitzung aufgrund der Stromwärmeverluste im Bereich der Stirnscheitelverbindung des Wickelkopfs, wodurch hohe Anforderungen an die Kühleinrichtung zum Kühlen des Wickelkopfs im Bereich der Stirnscheitelverbindung gestellt sind.

Als Kühleinrichtung ist eine Luftkühlung bekannt, die einen Axiallüfter aufweist, mit dem Kühlluft axial in das Gehäuse zum Kühlen der Ständerwicklung gefördert wird. Mit der Kühlluft wird das Wicklungsgeflecht durchströmt, wodurch aufgrund von Konvektionseffekten Wärme von dem Wicklungsgeflecht abgeführt wird. Hierbei ist es allerdings problematisch, dass insbesondere im Bereich der Stirnscheitelverbindung ein Heißpunkt des Wicklungsgeflechts auftreten kann, wodurch die Gefahr besteht im Bereich der Stirnscheitelverbindung das Wicklungsgeflecht thermisch zu überlasten.

Die DE 195 49 204 A1 offenbart eine Kühleinrichtung zum Kühlen eines luftdurchlässigen Wicklungsgeflechtes. Eine weitere Kühleinrichtung zum Kühlen einer elektrischen Maschine ist aus der DE 3242018 A1 bekannt.

Aufgabe der Erfindung ist es, eine Kühleinrichtung zum Kühlen eines luftdurchlässigen Wicklungsgeflechts einer elektrischen Maschine und eine elektrische Maschine mit der Kühleinrichtung zu schaffen, wobei das Wicklungsgeflecht und somit die elektrische Maschine effektiv gekühlt sind.

Die erfindungsgemäße Kühleinrichtung zum Kühlen eines luftdurchlässigen Wicklungsgeflechts einer elektrischen Maschine weist eine Leitwand und einen Lüfter auf, der angeordnet ist einen Kühlluftstrom im Wesentlichen senkrecht auf einen ersten Oberflächenabschnitt einer Seite des Wicklungsgeflechts zu blasen, wobei im Bereich eines neben dem ersten Oberflächenabschnitt angeordneten zweiten Oberflächenabschnitts der Seite des Wicklungsgeflechts die Leitwand im Wesentlichen parallel und in einem derartigen Abstand zur Oberfläche des zweiten Oberflächenabschnitts angeordnet ist, dass in dem von der Leitwand und dem zweiten Oberflächenabschnitt gebildeten Kanal ein Teilstrom des Kühlluftstroms ausgebildet ist, so dass an der der einen Seite abgewandten Seite des Wicklungsgeflechts der andere das Wicklungsgeflecht durchdringende Teilstrom des Kühlluftstroms rückströmfrei von dem Wicklungsgeflecht abströmt. Die elektrische Maschine weist einen Ständer und die Kühleinrichtung auf, wobei der Wickelkopf des Ständers das Wicklungsgeflecht aufweist.

Das Wicklungsgeflecht weist eine Stirnscheitelverbindung auf und die Oberfläche der Leitwand ist derart geformt, dass der Kanal im Bereich der Stirnscheitelverbindung ein Querschnittsminimum hat. Dadurch, dass an der Stirnscheitelverbindung eine hohe thermische Belastung des Wicklungsgeflechts beim Betrieb der elektrischen Maschine herrscht, ist es vorteilhaft, dass der Kühlluftstrom durch den Kanal mit einer durch das Querschnittsminimum erzielten hohen Geschwindigkeit vorbeiströmt, wodurch durch entsprechende Konvektionseffekte die Kühlung des Bereichs der Stirnscheitelverbindung des Wicklungsgeflechts effektiv ist.

Das nicht von den Ansprüchen umfasste Verfahren zum Nachrüsten einer elektrischen Maschine mit der Kühleinrichtung weist die Schritte auf: Bereitstellen einer bestehenden elektrischen Maschine mit einem Gehäuse, einem Lüfter, der angeordnet ist, einen Kühlluftstrom im Wesentlichen senkrecht auf einen ersten Oberflächenabschnitt einer Seite des Wicklungsgeflechts zu blasen, und einem Ständer, wobei der Wickelkopf des Ständers ein luftdurchlässiges Wicklungsgeflecht aufweist; Einbau in das Gehäuse eines Profilkörpers mit einer Leitwand, wobei im Bereich eines neben dem ersten Oberflächenabschnitt angeordneten zweiten Oberflächenabschnitts der Seite des Wicklungsgeflechts die Leitwand im Wesentlich parallel und in einem derartigen Abstand zur Oberfläche des zweiten Oberflächenabschnitts angeordnet wird, dass in dem von der Leitwand und dem zweiten Oberflächenabschnitt gebildeten Kanal ein Teilstrom des Kühlluftstroms ausgebildet wird, so dass an der der einen Seite abgewandten Seite des Wicklungsgeflechts der andere das Wicklungsgeflecht durchdringende Teilstrom des Kühlluftstroms rückströmfrei von dem Wicklungsgeflecht abströmt.

Der von dem Lüfter geförderte Kühlluftstrom prallt im Wesentlichen senkrecht auf den ersten Oberflächenabschnitt der einen Seite des Wicklungsgeflechts. Dadurch, dass das Wicklungsgeflecht luftdurchlässig ausgebildet ist, kann ein Teil des Kühlluftstroms das Wicklungsgeflecht durchdringen. Das Durchströmen des Wicklungsgeflechts ist strömungswiderstandsbehaftet, wodurch in Durchströmrichtung über das Wicklungsgeflecht ein Druckabfall zu verzeichnen ist. Beim Aufprallen des Kühlluftstroms auf das Wicklungsgeflecht weicht der eine Teilstrom aus und strömt entlang der Oberfläche des Wicklungsgeflechts, wobei der andere Teilstrom des Kühlstroms durch das Wicklungsgeflecht dringt. Der an der Oberfläche des Wicklungsgeflechts entlangströmende Teilstrom tritt in den Kanal ein und wird von der Leitwand im Wesentlichen parallel zur Oberfläche des zweiten Oberflächenabschnitts des Wicklungsgeflechts geführt. Aufgrund der Kontinuitätsbedingung ist durch die Breite des Kanals, der von dem Abstand der Leitwand zu dem zweiten Oberflächenabschnitt definiert ist, die Strömungsgeschwindigkeit des Teilstroms in dem Kanal bestimmt. Erfindungsgemäß ist der Abstand der Leitwand zu dem zweiten Oberflächenabschnitt und somit die Breite des Kanals so zu wählen, dass sich an der der einen Seite abgewandten anderen Seite des Wicklungsgeflechts beim Austreten des das Wicklungsgeflecht durchdringenden Teilstroms eine Ausbildung eines Rückstromgebiets unterbunden ist. Dies wird dadurch erreicht, dass bei einem entsprechend hohen Geschwindigkeitsniveau und einem entsprechend hohem Massenstrom des einen Teilstroms in dem Kanal der Teilstrom beim Austreten aus dem Kanal eine derart hohe kinetische Energie hat, dass die Ausbildung von einem Rückströmgebiet an der Kühlluftaustrittsseite des Wicklungsgeflechts nicht auftreten kann. Wäre im Gegensatz dazu das Geschwindigkeitsniveau in dem Kanal bzw. der Massenstrom und somit die kinetische Energie des aus dem Kanal austretenden Teilstroms zu gering, so könnten von dem durch das Wicklungsgeflecht austretenden Teilstrom etwa Wirbel ausgebildet und angetrieben werden, die als Totwassergebiete eine Wärmeabfuhr von dem Wicklungsgeflecht durch den Kühlluftstrom behindern. Dadurch, dass aufgrund der erfindungsgemäßen Kühleinrichtung die Ausbildung von Totwassergebieten an dem Wicklungsgeflecht unterbunden ist, ist das Wicklungsgeflecht von der Kühleinrichtung effektiv gekühlt.

Bevorzugt ist es, dass die Kontur der dem Wicklungsgeflecht zugewandten Oberfläche der Leitwand der Kontur des zweiten Oberflächenabschnitts der einen Seite des Wicklungsgeflechts nachempfunden ist. Dadurch ist über die Strömungslänge in dem Kanal das Geschwindigkeitsniveau in etwa konstant, wodurch die Wärmeabfuhr aus dem Wicklungsgeflecht entlang des Kanals im Wesentlichen gleichförmig ist. Außerdem ist es bevorzugt, dass der Lüfter einen Lüftermantel, mit dem der Lüfter ummantelt ist und in dem der Kühlluftstrom von dem Lüfter gefördert ist, und die Leitwand einen Einlassprofilabschnitt aufweist, der zwischen dem Lüftermantel und der dem Wicklungsgeflecht zugewandten Oberfläche der Leitwand so angeordnet ist, dass der eine Teilstrom des Kühlstroms ablösefrei in den Kanal von dem Einlassprofilabschnitt umgelenkt ist. Dadurch wird der Kühlluftstrom verlustarm von dem Lüftermantel zu dem Kanal geführt, wobei am Kanaleintritt ein entsprechend vorteilhaft hohes Geschwindigkeitsniveau ist. Außerdem sind in dem Zuströmbereich etwaige Verwirbelungen unterbunden, die sonst zu einer Reduzierung des Kühlluftstroms führen würden, wodurch die Effektivität bei der Kühlung des Wicklungsgeflechts herabgesetzt wäre.

Bevorzugtermaßen weist die Kühleinrichtung einen Profilkörper auf, der die Leitwand aufweist. Der Profilkörper ist bevorzugt ringförmig. Ferner ist der Profilkörper bevorzugt über den Umfang segmentiert ausgebildet. Außerdem ist der Profilkörper in seine Axialrichtung bevorzugt teilbar ausgebildet. Der Profilkörper ist bevorzugt aus einem Kunststoff mit einer Temperaturbeständigkeit von über 80°C hergestellt.

Bevorzugt könnte der Profilkörper aus einem Polyurethanschaum hergestellt sein, der eine Temperaturbeständigkeit bis ca. 120°C hat. Außerdem könnte der Profilkörper aus Polyester hergestellt sein, wobei der Profilkörper hohl ausgebildet ist. Die segmentierte und/oder in Axialrichtung teilbare Ausführung des Profilkörpers ist hinsichtlich dessen Montage vorteilhaft.

Die elektrische Maschine weist bevorzugt ein Gehäuse mit der Leitwand auf. Dadurch ist vorteilhaft das Gehäuse mit der Leitwand geformt, wobei die Leitwand in dem Gehäuse integriert ausgebildet ist. Bevorzugtermaßen ist die elektrische Maschine ein Generator. Außerdem ist es bevorzugt, dass beim Verfahren zum Nachrüsten der bestehenden elektrischen Maschine der Profilkörper an dem Gehäuse befestigt wird.

Im Folgenden wird eine bevorzugte Ausführungsform eines erfindungsgemäßen Generators anhand der beigefügten schematischen Zeichnungen erläutert.

Es zeigen:
- Figur 1: einen Längsschnitt im Stirnseitenbereich des Generators,
- Figur 2: ein Detail eines Profilkörperschnitts aus Figur 1,
- Figur 3: eine perspektivische Darstellung des Profilkörpers,
- Figuren 4, 5: perspektivische Darstellungen von Segmentschalen des Profilkörpers und
- Figur 6: einen Querschnittsausschnitt des Profilkörpers.

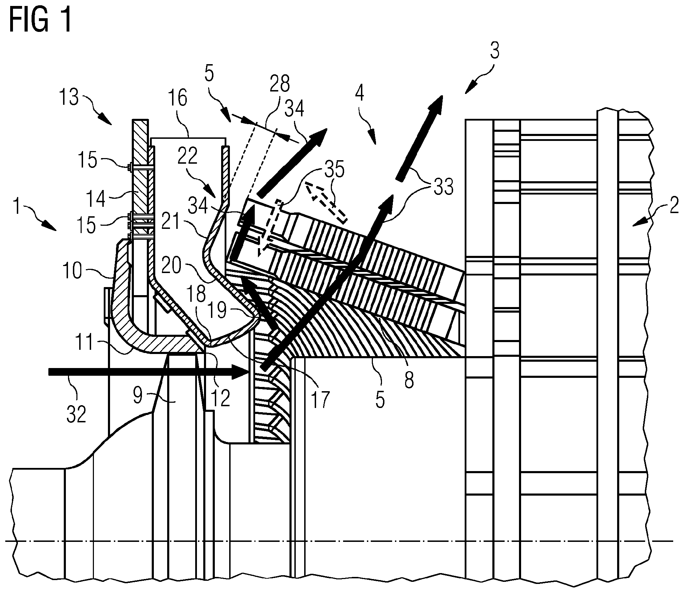

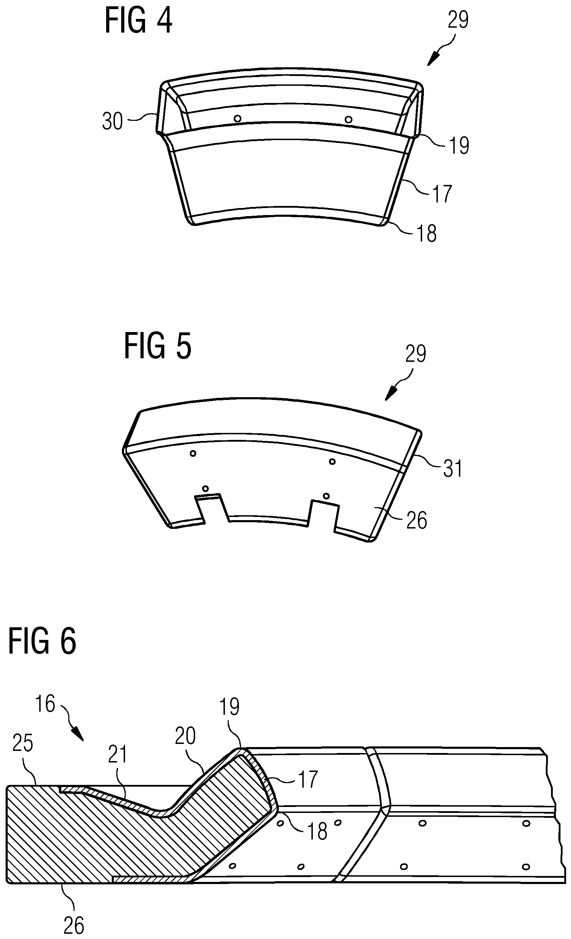

Wie es aus Figuren 1 bis 6 ersichtlich ist, weist ein Generator 1 einen Ständer 2 auf, der mit einer Ständerwicklung ausgestattet ist, die von einem luftdurchlässigen Wicklungsgeflecht 3 gebildet ist. Der Ständer 2 mit seiner Ständerwicklung ist rotationssymmetrisch um die Maschinenachse des Generators 1 ausgebildet, wobei stirnseitig das Wicklungsgeflecht 3 einen rotationssymmetrischen Wickelkopf 4 aufweist. Das Wicklungsgeflecht 3 ist von einem Wicklungsleiter 5 oder einer Mehrzahl an Wicklungsdrähten 5 gebildet, wobei der Wicklungsleiter 5 oder die Wicklungsdrähte 5 zu dem Wicklungsgeflecht 3 gewickelt sind. Der Wickelkopf 4 bildet eine Stirnseite 6 des Wicklungsgeflechts 3, an der eine Stirnscheitelverbindung 7 und eine Evolvente 8 der Ständerwicklung angeordnet sind.

Der Generator 1 ist luftgekühlt, wobei hierfür ein Lüfter 9 vorgesehen ist. Der Lüfter 9 weist ein um die Maschinenachse des Generators 1 rotierbares Schaufelrad auf, das von einer Mehrzahl gleichgeformten und über den Umfang äquidistant angeordneten Axialschaufeln gebildet ist. Die Axialschaufeln sind radial außenseitig von einem Lüftermantel 10 ummantelt, der stromauf des Lüfters 9 einen trompetenförmigen Einlauf 11 aufweist. Stromab des Lüfters 9 weist der Lüftermantel 10 eine umlaufende Abströmkante 12 auf, an der die von dem Lüfter 9 geförderte Kühlluft abströmt.

Der Generator 1 weist ein Gehäuse 13 auf, in dem der Ständer 2 angeordnet ist. Der Stirnseite 6 des Wicklungsgeflechts 3 benachbart angeordnet weist das Gehäuse 13 eine Gehäusewand 14 auf, die radial außerhalb des Lüfters 9 diesen konzentrisch umgebend angeordnet ist. Die Gehäusewand 14 ist als eine um die Maschinenachse des Generators 1 angeordnete Wand ausgebildet, an der innenseitig mit Schrauben 15 ein Profilkörper 16 befestigt ist.

Der Profilkörper 16 ist ringförmig ausgebildet und erstreckt sich von der Gehäusewand 14 axial und radial im Inneren des Gehäuses 13, wobei der Profilkörper 16 zwischen der Stirnseite 6 des Wickelkopfs 4 und der Gehäusewand 14 angeordnet ist. Der Profilkörper 16 ist in dem Gehäuse 13 zum Umlenken der von dem Lüfter 9 geförderten Kühlluft vorgesehen, wobei der Profilkörper 16 aus einem Kunststoff mit einer Temperaturbeständigkeit von über 80°C hergestellt ist.

Ferner ist der Profilkörper 16 so geformt, dass mit ihm die aerodynamisch wirksame Kontur des Lüftermantels 10 an der Abströmkante 12 mit einem Einlaufprofilabschnitt 17 im Wesentlichen übergangsfrei fortgesetzt ist, wobei unmittelbar im Anschluss an die Abströmkante 12 des Lüftermantels 10 der Einlaufprofilabschnitt 17 einen Zuströmrand 18 aufweist. Der Einlaufprofilabschnitt 17 des Profilkörpers 16 erstreckt sich in Strömungsrichtung der von dem Lüfter 9 geförderten Kühlluft trompetenförmig radial nach außen zu dem Wickelkopf 4 hin, wobei mit dem Einlaufprofilabschnitt 17 eine Umlenkung der Kühlluft radial nach außen bewirkt ist. An der dem Zuströmrand 18 abgewandten Seite des Einlaufprofilabschnitts 17 weist der Profilkörper 16 eine Nase 19 auf, mit der der Profilkörper 16 in Richtung zu dem Wickelkopf 4 axial am weitesten vorsteht. Die Stirnseite 6 des Wickelkopfs 4 ist radial außerhalb der Nase 19 angeordnet.

An die Nase 19 sich anschließend und die Kontur des Profilkörpers 16 bildend sind eine erste Leitwand 20 und eine zweite Leitwand 21 radial nach außen verlaufend angeordnet. Die erste Leitwand 20 und die zweite Leitwand 21 sind im Axialabstand von der Stirnseite 6 angeordnet und der Kontur der Stirnseite 6 nachempfunden. Im Radialschnitt steht der Wickelkopf 4 axial von der Evolvente 8 mit einer Rechteckform ab, wobei in der am weitesten vorstehenden Ecke der Rechteckform die Stirnscheitelverbindung 7 angeordnet ist. Um die Stirnscheitelverbindung 7 sind die erste Leitwand 20, die einem ersten Oberflächenabschnitt 36 der Stirnseite 6 gegenüberliegend angeordnet ist, und die zweite Leitwand 21, die einem zweiten Oberflächenabschnitt 37 der Stirnseite 6 gegenüberliegend angeordnet ist, herumgeführt, wodurch sich an der Stirnseite 6 und den Kanalwänden 21, 22 ein Umgehungsraum 22 ausbildet. Von der ersten Leitwand 20 ist ein erster Umgehungsraumabschnitt 23 des Umgehungsraums 22 und von dem zweiten Kanalabschnitt 21 ist ein zweiter Kanalumgehungsabschnitt 24 des Umgehungsraums 22 ausgebildet. Radial nach außen schließt sich an dem Profilkörper 16 ein Auslaufprofil 25 an, das als scheibenförmig und senkrecht zur Maschinenachse des Generators 1 ausgebildet ist. Ferner weist der Profilkörper 16 eine Rückseite 26 auf, die dem Zuströmrand 18, dem Einlaufprofilabschnitt 17, der Nase 19, den Kanalwänden 20, 21 sowie den Umgehungsraumabschnitten 23, 24 und dem Auslaufprofil 25 abgewandt angeordnet ist. An der Rückseite 26 ist der Profilkörper 16 an der Gehäusewand 14 mit den Schrauben 15 befestigt.

Der erste Umgehungsraumabschnitt 23 definiert mit seinem Abstand von der Stirnseite 6 eine Breite 27 und der zweite Umgehungsraumabschnitt 24 definiert mit seinem Abstand zur Stirnseite 6 eine andere Breite 28. Die Breiten 27, 28 definieren somit die Breite des Umgehungsraums 22. Als Kühlluftstrom wird von dem Lüfter 9 ein Gesamtkühlluftstrom 32 in das Gehäuse 13 gefördert. Der Gesamtkühlluftstrom 32 wird am Einlauf 11 des Kühlermantels 10 angesaugt und strömt an der Abströmkante 12 des Lüftermantels 10 ab. An der Abströmkante 12 unmittelbar angeordnet ist der Zuströmrand 18 des Profilkörpers 16, der in Strömungsrichtung des Gesamtkühlluftstroms 32 in den Einlaufprofilabschnitt 17 übergeht. Dadurch, dass der Einlaufprofilabschnitt 17 nach außen sich aufweitet, wird der Gesamtkühlluftstrom 32 mit einer Radialgeschwindigkeitskomponente versehen.

Ein Teil des Gesamtkühlluftstroms 32 durchdringt als ein Durchdringungsteilstrom 33 den Wickelkopf 4 und das Wicklungsgeflecht 3. Dadurch, dass das Wicklungsgeflecht 3 von der geflechtartigen Anordnung der Wicklungsdrähte 5 luftdurchlässig ausgebildet ist, kann der Durchdringungsteilstrom 33 das Wicklungsgeflecht 3 durchdringen. Dies geschieht jedoch unter der Entstehung von Strömungsverlusten, wodurch der Durchdringungsteilstrom 33 beim Durchströmen des Wicklungsgeflechts 3 einem Druckabfall unterworfen ist. Damit geht einher eine Erhöhung des statischen Drucks an der Stelle des Wickelkopfs 4, an der der Gesamtkühlluftstrom 32 auf den Wickelkopf 4 trifft. Dadurch bildet sich insbesondere ein Umgehungsteilstrom 34 als ein Teilstrom des Gesamtkühlluftstroms 32 aus, der an der Nase 19 in den Umgehungsraum 22 eintritt. Somit teilt sich der Gesamtkühlluftstrom 32 in den Durchdringungsteilstrom 33 und den Umgehungsteilstrom 34 auf.

Der Umgehungsteilstrom 34 wird in dem ersten Umgehungsraumabschnitt 23 zu der Stirnscheitelverbindung 7 geführt, wohingegen in dem zweiten Umgehungsraumabschnitt 24 der Umgehungsteilstrom 34 von der Stirnscheitelverbindung 7 abströmt. Tritt der Umgehungsteilstrom 34 aus dem zweiten Umgehungsraumabschnitt 24 aus, so vereinigt sich der Umgehungsteilstrom 34 mit dem durch Durchdringungsteilstrom 33, der an der der Stirnseite 6 abgewandeten Seite des Wicklungsgeflechts 3 austritt. Diese Vereinigung des Durchdringungsteilstroms 33 und des Umgehungsteilstroms 34 geschieht rückströmfrei, wodurch an dem Wicklungsgeflecht 3 etwa Totwassergebiete unterbunden sind.

Die Breite 27 des ersten Umgehungsraumabschnitts 23 und die Breite 28 des zweiten Umgehungsraumabschnitts 24 sind so gewählt, dass die Massenströme des Durchdringungsteilstroms 33 und des Umgehungsteilstroms 34 so gewählt sind, dass die Vereinigung dieser Teilströme 33, 34 rückströmfrei stattfindet. Wären etwa die Breiten 27, 28 nicht so gewählt, dass die Teilströme 33, 34 eine rückströmfreie Vereinigung erfahren, so würde sich etwa eine Rückströmung 35 am Wicklungsgeflecht 3 einstellen. Die Rückströmung 35 würde ein Totwassergebiet darstellen, durch das die Kühlung des Wicklungsgeflechts 3 von dem Gesamtkühlluftstrom 32 behindert ist.

Durch das Vorbeiführen und Umströmen insbesondere der Stirnscheitelverbindung 7 durch den Umgehungsteilstrom 34 in dem Umgehungsraum 22 ist die Stirnscheitelverbindung 7 effektiv gekühlt. Außerdem ist das Wicklungsgeflecht 3 von dem Durchdringungsteilstrom 33 gleichmäßig durchdrungen, da etwa von dem Ausbleiben der Rückströmung 35, die erfindungsgemäß nicht auftritt, ein gleichmäßiges Abströmen des Durchdringungsteilstroms 33 von dem Wicklungsgeflecht 3 gegeben ist. Dadurch ist eine effektive Kühlung des Wicklungsgeflechts 3 erzielt.

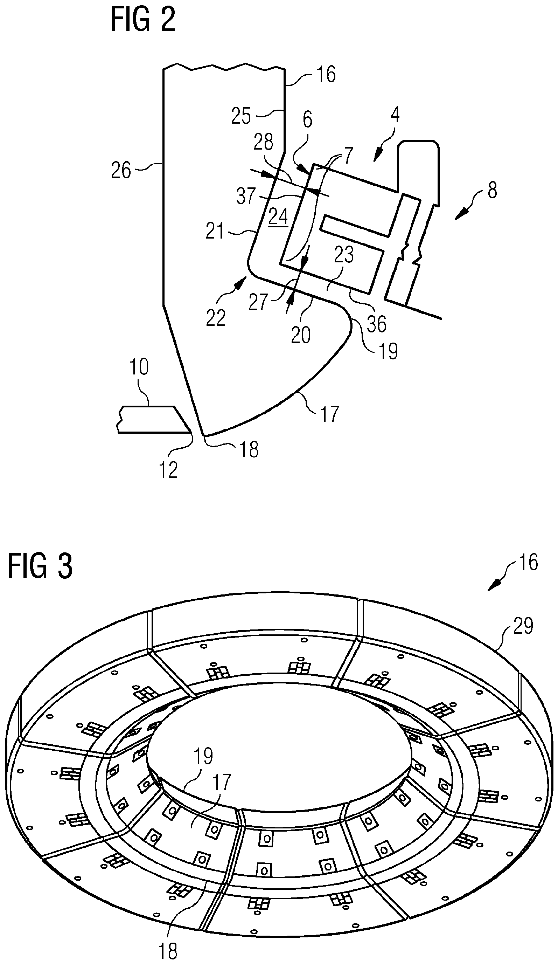

Der Profilkörper 16 ist über den Umfang gesehen segmentiert ausgeführt, wobei gemäß Fig. 3 bis 5 der Profilkörper aus acht Segmenten 29 gebildet ist. Der Profilkörper 16 ist hohl ausgeführt und die einzelnen Segmente 29 sind von Segmentschalen 30, 31 gebildet. Die erste Segmentschale 30 bildet den Einlaufprofilabschnitt 17, den Zuströmrand 18, die Nase 19, die Kanalwände 20, 21 sowie das Auslaufprofil 25. Die zweite Segmentschale 31 bildet insbesondere die Rückseite 26. Die Ausbildung des Profilkörpers 16 mit den Segmenten 29, die mit dem Segmentschalen 30, 31 gebildet sind, erleichtert die Montage des Profilkörpers 16 in das Gehäuse 13.

## Patentansprüche

1. Elektrische Maschine mit einer Kühleinrichtung zum Kühlen eines luftdurchlässigen Wicklungsgeflechts (3) der elektrischen Maschine (1),
mit einer Leitwand (20, 21) und einem Lüfter (9), der angeordnet ist, einen Kühlluftstrom (32) senkrecht auf einen ersten Oberflächenabschnitt (36) der Stirnseite (6) einer Seite des Wicklungsgeflechts (3) zu blasen,
wobei im Bereich eines neben dem ersten Oberflächenabschnitt (37) angeordneten zweiten Oberflächenabschnitts (37) der Stirnseite (6) der Seite des Wicklungsgeflechts (3) die Leitwand (20, 21) parallel und in einem derartigen Abstand (27, 28) zur Oberfläche des zweiten Oberflächenabschnitts (37) der Stirnseite (6) angeordnet ist, dass in dem von der Leitwand (20, 21) und dem zweiten Oberflächenabschnitt (37) der Stirnseite (6) gebildeten Kanal (22) ein Teilstrom (34) des Kühlluftstroms (32) ausgebildet ist, so dass an der der einen Seite abgewandten Seite des Wicklungsgeflechts (3) der andere das Wicklungsgeflecht (3) durchdringende Teilstrom (33) des Kühlluftstroms (32) rückströmfrei von dem Wicklungsgeflecht (3) abströmt,
**dadurch gekennzeichnet, dass**
das Wicklungsgeflecht (3) eine Stirnscheitelverbindung (7) aufweist und die Oberfläche der Leitwand (20) derart geformt ist, dass der Kanal im Bereich der Stirnscheitelverbindung (7) ein Querschnittsminimum (27) hat.

2. Elektrische Maschine gemäß Anspruch 1,
wobei die Kontur der dem Wicklungsgeflecht (3) zugewandten Oberfläche der Leitwand (20, 21) der Kontur des zweiten Oberflächenabschnitts (37) der Stirnseite (6) der einen Seite des Wicklungsgeflechts (3) nachempfunden ist.

3. Elektrische Maschine gemäß Anspruch 1 oder 2,
wobei der Lüfter (9) einen Lüftermantel (10), mit dem der Lüfter (9) ummantelt ist und in dem der Kühlluftstrom (32) von dem Lüfter (9) gefördert ist, und die Leitwand (20, 21) einen Einlaufprofilabschnitt (17) aufweist, der zwischen dem Lüftermantel (10) und der dem Wicklungsgeflecht (3) zugewandten Oberfläche der Leitwand (20, 21) so angeordnet ist, dass der eine Teilstrom (34) des Kühlluftstroms (32) ablösefrei in den Kanal (22) von dem Einlaufprofilabschnitt (17) umgelenkt ist.

4. Elektrische Maschine gemäß einem der Ansprüche 1 bis 3,
wobei die Kühleinrichtung einen Profilkörper (16) aufweist, der die Leitwand (20, 21) aufweist.

5. Elektrische Maschine gemäß Anspruch 4,
wobei der Profilkörper (16) ringförmig ist.

6. Elektrische Maschine gemäß Anspruch 5,
wobei der Profilkörper (16) über den Umfang segmentiert ausgebildet ist.

7. Elektrische Maschine gemäß Anspruch 5 oder 6,
wobei der Profilkörper (16) in seine Axialrichtung teilbar ausgebildet ist.

8. Elektrische Maschine gemäß einem der Ansprüche 4 bis 6,
wobei der Profilkörper (16) aus einem Kunststoff mit einer Temperaturbeständigkeit von über 80°C hergestellt ist.

9. Elektrische Maschine gemäß einem der Ansprüche 1 bis 8 mit einem Ständer
wobei der Wickelkopf (4) des Ständers (2) das Wicklungsgeflecht (3) aufweist.

10. Elektrische Maschine gemäß Anspruch 9,
wobei die elektrische Maschine (1) ein Gehäuse (13) mit der Leitwand (20, 21) aufweist.

11. Elektrische Maschine gemäß Anspruch 9 oder 10,
wobei die elektrische Maschine ein Generator (1) ist.

## Claims

1. Electrical machine comprising a cooling device for cooling an air-permeable winding braid (3) of the electrical machine (1),
comprising a baffle (20, 21) and a fan (9), which is arranged to blow a stream of cooling air (32) perpendicularly onto a first surface portion (36) of the end side (6) of one side of the winding braid (3), wherein, in the region of a second surface portion (37) of the end side (6) of the side of the winding braid (3), said second surface portion being arranged beside the first surface portion (37), the baffle (20, 21) is arranged parallel to and at a distance (27, 28) from the surface of the second surface portion (37) of the end side (6) in such a way that a partial stream (34) of the stream of cooling air (32) is formed in the channel (22) that is formed by the baffle (20, 21) and the second surface portion (37) of the end side (6) and therefore, on the side of the winding braid (3) that faces away from the first-mentioned side, the other partial stream (33), penetrating the winding braid (3), of the stream of cooling air (32) flows away from the winding braid (3) without any return flow,
**characterized in that**
the winding braid (3) comprises an end crown connection (7), and the surface of the baffle (20) is formed in such a way that the channel has a cross section minimum (27) in the region of the end crown connection (7).

2. Electrical machine according to Claim 1,
wherein the contour of the surface of the baffle (20, 21) that faces the winding braid (3) is based on the contour of the second surface portion (37) of the end side (6) on the first-mentioned side of the winding braid (3).

3. Electrical machine according to Claim 1 or 2,
wherein the fan (9) comprises a fan casing (10), by means of which the fan (9) is encased and in which the stream of cooling air (32) is conveyed by the fan (9), and the baffle (20, 21) comprises an inlet profile portion (17), which is arranged between the fan casing (10) and the surface of the baffle (20, 21) facing the winding braid (3), such that a partial stream (34) of the stream of cooling air (32) is deflected by the inlet profile portion (17) into the channel (22) without transfer.

4. Electrical machine according to one of Claims 1 to 3,
wherein the cooling device comprises a profiled member (16), which comprises the baffle (20, 21).

5. Electrical machine according to Claim 4,
wherein the profiled member (16) is annular.

6. Electrical machine according to Claim 5,
wherein the profiled member (16) is segmented over the periphery.

7. Electrical machine according to Claim 5 or 6,
wherein the profiled member (16) is divisible in its axial direction.

8. Electrical machine according to one of Claims 4 to 6,
wherein the profiled member (16) is produced from a plastic having a temperature resistance of more than 80 °C.

9. Electrical machine according to one of Claims 1 to 8 comprising a stator,
wherein the winding head (4) of the stator (2) comprises the winding braid (3).

10. Electrical machine according to Claim 9,
wherein the electrical machine (1) comprises a housing (13) with the baffle (20, 21).

11. Electrical machine according to Claim 9 or 10,
wherein the electrical machine is a generator (1).

## Revendications

1. Machine électrique dotée d'un dispositif de refroidissement destiné au refroidissement d'un bobinage (3) perméable à l'air de cette machine électrique (1),
avec un déflecteur (20, 21) et un ventilateur (9) disposé pour envoyer un flux d'air de refroidissement (32) à la perpendiculaire sur une première section de la surface (36) du côté frontal (6) d'un côté du bobinage (3),
au niveau d'une deuxième section de la surface (37) du côté frontal (6) du côté du bobinage (3), disposée à côté de la première section de la surface (37), le déflecteur (20, 21) est disposé parallèlement à la surface de la deuxième section de la surface (37) du côté frontal (6) et à une distance (27, 28) telle qu'il se forme dans le canal (22) formé par le déflecteur (20, 21) et la deuxième section de la surface (37) du côté frontal (6), un flux partiel (34) du flux d'air de refroidissement (32), si bien que, sur le côté du bobinage (3) opposé au premier côté, l'autre flux partiel (33) du flux d'air de refroidissement (32) qui traverse le bobinage (3) peut quitter le bobinage (3) sans reflux,
**caractérisé en ce que**
le bobinage (3) comporte un connecteur de pointe (7) et la surface du déflecteur (20) est usinée de sorte que le canal présente, au niveau du connecteur de pointe (7) une section minimale (27).

2. Machine électrique selon la revendication 1,
le contour de la surface du déflecteur (20, 21) tournée vers le bobinage (3) du déflecteur (20, 21) est basé sur le contour de la deuxième section de surface (37) du côté frontal (6) du premier côté du bobinage (3).

3. Machine électrique selon la revendication 1 ou 2,
le ventilateur (9) comportant une enveloppe de ventilateur (10), entourant le ventilateur (9), et dans laquelle le flux d'air de refroidissement (32) est acheminé du ventilateur (9), et le déflecteur (20, 21) comportant une section profilée d'admission (17), disposée entre l'enveloppe de ventilateur (10) et la surface du déflecteur (20, 21) tournée vers le bobinage (3) de sorte que le premier flux partiel (34) du flux d'air de refroidissement (32) est dévié sans décollement dans le canal (22) par la section profilée d'admission (17).

4. Machine électrique selon une des revendications 1 à 3,
le dispositif de refroidissement présentant un corps profilé (16) comportant le déflecteur (20, 21).

5. Machine électrique selon la revendication 4,
le corps profilé (16) étant annulaire.

6. Machine électrique selon la revendication 5,
le corps profilé (16) étant réalisé segmenté sur le pourtour.

7. Machine électrique selon la revendication 5 ou 6,
le corps profilé (16) étant réalisé divisible dans le sens axial.

8. Machine électrique selon une des revendications 4 à 6,
le corps profilé (16) étant fabriqué en matière synthétique avec une résistance à des températures supérieures à 80°C.

9. Machine électrique selon une des revendications 1 à 8,
avec un support, la tête de bobine (4) du support (2) comportant le bobinage (3).

10. Machine électrique selon la revendication 9,
cette machine électrique (1) comportant une carcasse (13) avec le déflecteur (20, 21).

11. Machine électrique selon la revendication 9 ou 10,
cette machine électrique étant une génératrice (1).
